# EUROPEAN PATENT APPLICATION

(11) **EP 1 666 859 A1**
(43) Date of publication of application: **07.06.2006**
(21) Application number: 04106284.5
(22) Date of filing: 03.12.2004
(51) Int. Cl.: G01L 1/20, B60N 2/00, H01C 10/10

(54) **Method for manufacturing a sensor mat**

(71) Applicant: IEE INTERNATIONAL ELECTRONICS & ENGINEERING S.A., 6468 Echternach (LU)
(72) Inventor: Chabach, Driss, 9676, NOERTRANGE (LU)
(74) Representative: Beissel, Jean

(57) **Abstract**

A method for manufacturing a sensor mat with active areas interconnected by strips of flexible material comprises the steps of:
- applying a plurality of primary resistive patches onto a first carrier foil, the resistive patches being associated to the active areas;
- applying a plurality of secondary resistive patches onto the first carrier foil;
- measuring a physical quantity on some of the secondary resistive patches, the physical quantity being indicative of quality of application of the primary and secondary resistive patches;
- assembling the first carrier foil and a second carrier foil having a plurality of electrodes associated to the active areas, thereby forming a foil assembly;
- cutting out at least one predetermined region of the foil assembly, the at least one region not containing any active area but comprising a part of the secondary resistive patches.

## Description

### Introduction

The present invention relates to sensor mat production and in particular to the production of foil-type pressure sensing mats.

In the automotive industry there is a growing need for sensor mats for detecti ng the occupant of a passenger seat. These sensor mats generally consist in two carrier foils laminated together, but spaced apart in some active areas. In these areas, electrode assemblies are arranged, so that an electrical contact is caused by a certain amount of pressure acting onto the sensor.

Each active area of the sensor mat represents an individual pressure sensor. These individual pressure sensors are arranged in an array and associated at suitable locations to the seating surface of the vehicle seat. They are interconnected by flexible strips made of the carrier foils. These strips of carrier foils also carry the conducting lines, which are necessary to electrically interconnect the individual pressure sensors in a suitable configuration.

In a first possible arrangement, a first electrode is applied onto a first carrier foil and a second electrode is applied onto a second carrier foil, so that they face each other in an active area of the sensor mat. A patch of resistive material is arranged on top of the first electrode in electrical contact with the first electrode. In response to pressure acting onto the pressure sensor, the second electrode and the resistive patch of the first electrode are pressed together against the reaction force of the carrier foils so that the electrical resistance between the electrodes decreases.

In a second arrangement, first and second electrodes are arranged in an active area on the same carrier foil. On the other carrier foil a resistive patch is arranged so that it faces the two electrodes in an active area of the sensor mat. In response to pressure acting on the sensor, the resistive patch is pressed onto the two electrodes, which results in a decreasing electrical resistance between the two electrodes.

Methods for manufacturing such sensor mats are preferably cost-effective and reliable At present, sensors mats are completely assembled and tested only as the final product. This allows to reliably eliminate defective and malfunctioning sensor mats, but has the disadvantage that defects occurring at an early stage of production can only be detected on the final product.

### Object of the invention

The object of the present invention is to provide an improved method for manufacturing a sensor mat.

### General description of the invention

Above object is achieved by a method for manufacturing a sensor mat with active areas interconnected by strips of flexible material according to claim 1.

The method comprises the steps of:
- applying a plurality of primary resistive patches onto a first carrier foil, the resistive patches being associated to the active areas;
- applying a plurality of secondary resistive patches onto the first carrier foil;
- measuring a physical quantity on some of the secondary resistive patches, the physical quantity being indicative of quality of application of the primary and secondary resistive patches;
- assembling the first carrier foil and a second carrier foil having a plurality of electrodes associated to the active areas, thereby forming a foil assembly;
- cutting out at least one predetermined region of the foil assembly, the at least one region comprising at least a part of the secondary resistive patches.

According to the above method, a intermediate quality check with regard to the application of the resistive patches is performed before assembly of the final product. If quality of application is unsuitable for a sensor mat, the unfinished product may be eliminated from the production. As this quality check may be performed at an early stage, it will ensue that raw materials and production costs are saved.

As the measurement is done on the secondary resistive patches, the primary resistive patches are not affected. This is particularly useful if the measurement can damage the resistive patch that is analysed. For example, if a resistivity measurement is to be performed, pressing electrodes onto the resistive patch may damage the latter, making it unusable for later pressure sensing.

The secondary resistive patches may be distributed over the first carrier foil so that it is possible to determine an overall quality of application by measuring only a few of them.

It will be noted, that during the step of cutting out predetermined regions, the sensor mat may obtain its final shape with the different active areas being interconnected by flexible connection strips. The cutting out of at least one predetermined, active-area free region of the foil assembly thus confers a sensor mat structure with a higher flexibility, which is more appropriate for installing into a vehicle seat. An open, meandering sensor mat has several advantages compared to a plain sheet-like structure, with regard to seating comfort of a passenger. The higher flexibility makes it less noticeable by touch and the open structure allows airflow through the sensor mat, preventing trapping of humidity between the passenger and the sensor mat.

A part of the secondary resistive patches are cut out after assembly of the two carrier foils. Their first purpose being monitoring the application quality of the primary and secondary resistive patches, some of them may be cut out after that production step. Thus integrating all secondary resistive patches into the region of the final sensor mat is not necessary, which facilitates sensor layout. Nevertheless, some secondary resistive patches may remain on the final product for later use.

According to a preferred embodiment, the plurality of primary resistive patches and the plurality of secondary resistive patches are applied within a single production step. The resistive material of the primary and secondary resistive patches may for example be applied to, stuck to, deposited onto or printed onto said first carrier foil. In case of printing, the resistive material may be resistive ink.

In order to enable a reliable control of the application quality of the resistive patches, the secondary resistive patches preferably have substantially the same shape as the primary resistive patches. There are e.g. cases where the shape of the resistive patch considerably influences the sensor response and thus it may constitute an advantage to have a resistive test patch having a similar shape as the resistive patch of the sensor.

Advantageously, at least one secondary patch is not contained in the at least one region to be cut out, and the method further comprises the step of electrically connecting the at least one secondary resistive patch as a reference element. Ageing of the resistive material can result in a change of resistivity and thus in a different sensor response over sensor lifetime. This consideration is also true for temperature variations. By introducing a reference element one can monitor and/or compensate for ageing or temperature effects and thus enhance reliability of the sensor mat with regard to passenger seat occupation detection.

The method may also comprise the step of applying electrodes onto the first carrier foil prior to applying the primary or secondary resistive patches. That additional step enables production of sensor mats with electrodes on each of the two carrier foils. The electrodes may be made of conductive or semiconductive material, which may likewise be applied to, stuck to, deposited onto or printed onto said first carrier foil.

According to a particular embodiment, the method further comprises the step of applying primary or secondary resistive patches onto the second carrier foil prior to assembling the carrier foils. Thus it is possible to produce sensor mats where both carrier foils have resistive patches arranged thereon. As pressure is acting on the sensor mat, two primary resistive patches associated to a same active area are pressed together.

### Detailed description with respect to the figures

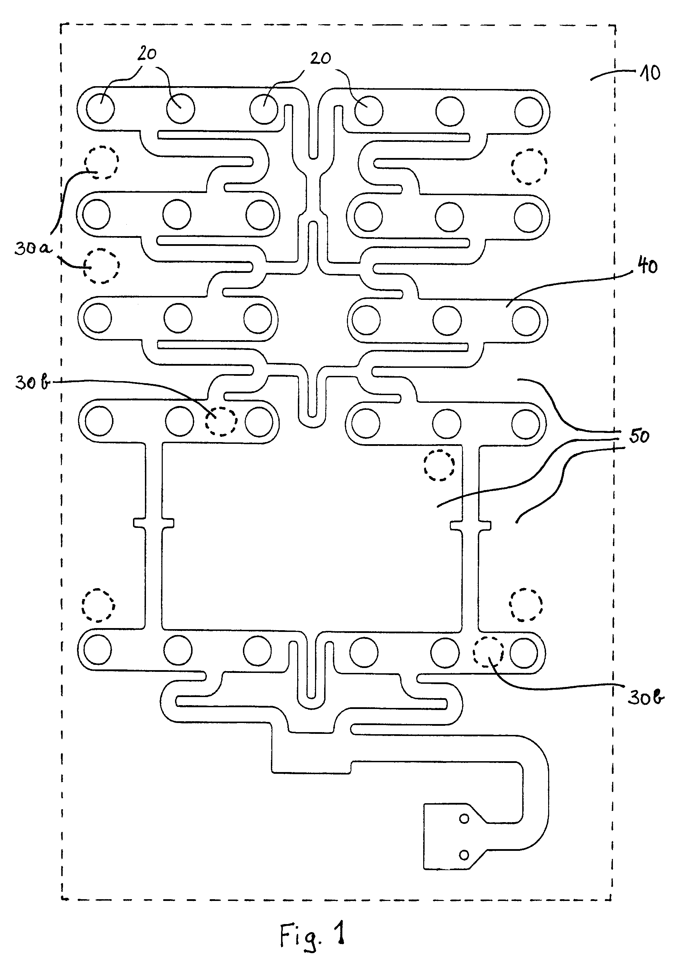

The present invention will be more apparent from the following description of a not limiting embodiment with reference to the attached figure 1, which shows a carrier foil of a final sensor mat.

In a first production step of a sensor mat, electrodes and electrically conductive lines are printed onto the first carrier foil 10. The electrodes are associated to the active areas of the sensor mat, which are distributed over the carrier foil in an application specific, regular or irregular arrangement having roughly the shape of the end product. In regions where a higher sensing resolution is desired, the density of active areas is higher.

The primary resistive patches 20 and secondary resistive patches 30 are printed onto the first carrier foil 10 in a second production step. The primary resistive patches 20 are electrically connected to the electrodes in the active areas on the first carrier foil. A part of the secondary resistive patches 30 is arranged outside the region of the end product 40. They are distributed over the first carrier foil, so that one can determine the printing quality in several parts of the carrier foil.

Quality measurement is preferably done automatically on the secondary resistive patches 30. In the present embodiment of the invention, a resistivity measurement is performed. A bias voltage is applied between two separate spots of a secondary resistive patch and the resistance over the distance between the contacting electrodes is determined. During this process, the measured secondary resistive patch 30 may be damaged by the electrodes without affecting the operability of the final sensor mat. If this test had to be performed on a primary resistive patch, which is used in the final sensor mat, damage due to quality measurement would result in rejection of the sensor mat.

If the measurement indicates that the quality of application does not meet the predetermined specifications, the production of that particular sensor mat or even of the whole run may be stopped. As this quality check is performed early in the production chain, one can reduce the reject rate of the final product and save raw material, thus giving rise to more cost-efficient production.
If the resistive patches pass the check, a second carrier foil with electrodes is assembled with the first carrier foil 10. The second carrier foil also has electrodes associated to the active areas of the sensor mat. In an active area, the two foils with their respective electrode assemblies are spaced apart by means of a spacer, so that the electrode assemblies are only in contact if a certain amount of pressure acts on the sensor mat.

The sensor mat takes its final shape as the regions without conductive lines or active areas 50 are cut out. A part of the resistive patches, in particular those, which have been used for measurement, are eliminated from the end product in this step. Some secondary resistive patches 30b have however been printed onto the sensor region. They have a similar shape as the primary resistive patches and are electrically connected so as to serve as reference elements. The reference elements are used in the final product to monitor and to correct a changing resistivity of the resistive material due to temperature changes or ink ageing.

The flexible strips wearing the electrically conductive lines and the active areas have a meandering shape so as to give the sensor mat a higher flexibility, which assures a comfortable seated position of the passenger after installation in a vehicle seat.

## Claims

1. Method for manufacturing a sensor mat with active areas interconnected by strips of flexible material, comprising the steps of:
applying a plurality of primary resistive patches onto a first carrier foil, said resistive patches being associated to said active areas;
applying a plurality of secondary resistive patches onto said first carrier foil;
measuring a physical quantity on some of said secondary resistive patches, said physical quantity being indicative of quality of application of said primary and secondary resistive patches;
assembling said first carrier foil and a second carrier foil having a plurality of electrodes associated to said active areas, thereby forming a foil assembly;
cutting out at least one predetermined region of said foil assembly, said at least one region comprising at least a part of said secondary resistive patches.

2. Method according to claim 1, wherein said plurality of primary resistive patches and said plurality of secondary resistive patches are applied within a single production step.

3. Method according to claim 1 or 2, wherein said secondary resistive patches have substantially the same shape as the primary resistive patches.

4. Method according to any one of claims 1 to 3, wherein at least one secondary patch is not contained in said at least one region, said method further comprising the step of electrically connecting said at least one secondary resistive patch as a reference element.

5. Method according to any one of claims 1 to 4, comprising the step of applying electrodes onto said first carrier foil prior to applying said primary or secondary resistive patches.

6. Method according to any one of claims 1 to 5, comprising the step of applying primary or secondary resistive patches onto said second carrier foil prior to assembling said carrier foils.
